# EUROPÄISCHE PATENTANMELDUNG

(11) **EP 1 104 838 A2**
(43) Veröffentlichungstag der Anmeldung: **06.06.2001**
(21) Anmeldenummer: 00125941.5
(22) Anmeldetag: 28.11.2000
(51) Int. Cl.: F01K 23/10, F01K 9/00, F01K 13/00

(54) **Kombikraftwerk**

(30) Priorität: 01.12.1999 DE 19957874
(71) Anmelder: ALSTOM (Schweiz) AG, 5400 Baden (CH)
(72) Erfinder: Liebig, Erhard, 79725 Laufenburg (DE); Schulz, Ralph, 79761 Waldshut-Tiengen (DE)

(57) **Zusammenfassung**

Bei einem Kombikraftwerk (32) mit einer Mehrzahl von parallel arbeitenden Leistungsinseln (L1,..,L3), welche jeweils eine Gasturbinenanlage (3), eine Dampfturbine (5), einen Generator (4), einen Wasser/Dampfkreislauf mit einem Abhitzedampferzeuger (13) und einem Kondensator (K1,..,K3), und zugehörige Hilfsanlagen umfassen, wird eine weitergehende Standardisierung dadurch ermöglicht, dass jeder der Leistungsinseln (L1,..,L3) ein eigener Kühlturm (KT1,..,KT3) zugeordnet ist, und dass der Kühlturm (KT1,..,KT3) mit dem jeweiligen Kondensator (K1,..,K3) in Verbindung steht.

## Beschreibung

### TECHNISCHES GEBIET

Die vorliegende Erfindung bezieht sich auf das Gebiet der Kraftwerkstechnik. Sie betrifft ein Kombikraftwerk gemäss dem Oberbegriff des Anspruchs 1.

Ein solches Kombikraftwerk ist aus der Praxis bekannt.

### STAND DER TECHNIK

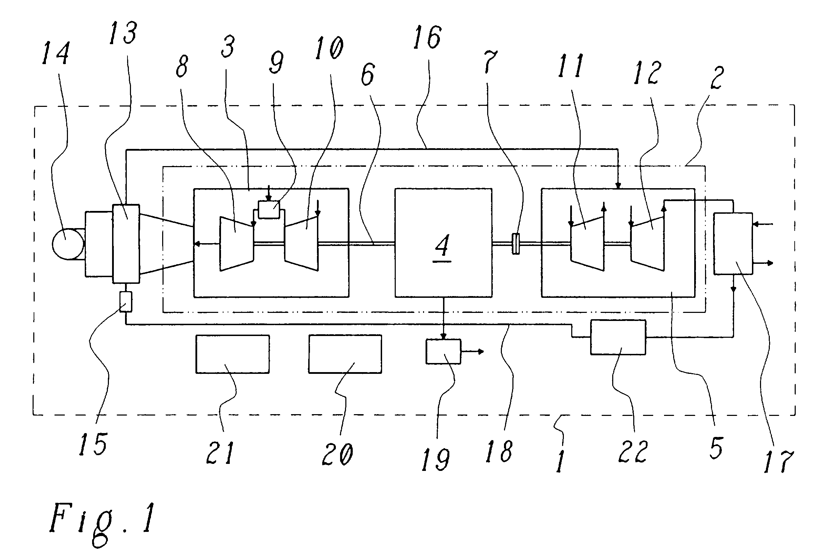

Im Zuge der Standardisierung und Vereinheitlichung von Kraftwerksanlagen werden bei Kombikraftwerken, bei denen die heissen Rauchgase von Gasturbinenanlagen zur Dampferzeugung für Dampfturbinen verwendet werden, als Untergruppen zunehmend standardisierte Leistungsinseln ("power islands") eingesetzt. Eine solche beispielhafte Leistungsinsel, die jeweils eine Gasturbinenanlage, eine Dampfturbine, einen Generator und einen Wasser/Dampfkreislauf nebst zugehörigen Hilfsanlagen und erforderlicher Steuerungstechnik umfasst, ist in Fig. 1 wiedergegeben.

Zentrale Einheit der Leistungsinsel 1 in Fig. 1 ist der sogenannte Wellenstrang ("power train") 2 (strichpunktierte Linie), bei dem auf einer Welle 6 eine Gasturbinenanlage 3, ein Generator 4 und (über eine Kupplung 7) eine Dampfturbine 5 angeordnet sind (Einwellenanlage). Ein solcher Wellenstrang kann ebenfalls standardisiert sein. Die Gasturbinenanlage 3 enthält üblicherweise einen Verdichter 10 zum Verdichten der Verbrennungsluft, eine Brennkammer 9, in welcher ein gasförmiger und/oder flüssiger Brennstoff unter Zugabe der Verbrennungsluft verbrannt werden, und eine Turbine 8, in welcher die heissen Rauchgase aus der Brennkammer 9 entspannt werden. Die Turbine 8 kann mehrere Stufen aufweisen. Desgleichen kann zwischen zwei Stufen eine zweite Brennkammer vorgesehen sein.

Die aus der Turbine 8 austretenden heissen Rauchgase werden durch einen nachfolgenden Abhitzedampferzeuger (englisch: Heat Recovery Steam Generator HRSG) oder Abhitzekessel 13 geschickt, wo sie unter Abgabe von Wärme an einen Wasser/Dampfkreislauf abgekühlt und anschliessend durch einen Kamin 14 nach aussen abgegeben werden. In dem genannten Wasser/Dampfkreislauf wird Wasser aus einem Speisewasserbehälter 22 über eine Speisewasserleitung 18 mittels einer Speisewasserpumpe 15 durch die im Inneren des Abhitzedampferzeugers 13 angeordneten Wärmetauscher (Economizer, Verdampfer, Ueberhitzer etc.) gepumpt und in hochgespannten Dampf umgewandelt, der als Frischdampf über eine Frischdampfleitung 16 zur Dampfturbine 5 geschickt wird.

Die Dampfturbine 5 umfasst üblicherweise verschiedene Turbinenstufen (Hochdruckstufe, Mitteldruckstufe, Niederdruckstufe), von denen zwei (11 und 12) in Fig. 1 beispielhaft eingezeichnet sind. Neben der Frischdampfleitung 16 können weitere Leitungen zwischen der Dampfturbine 5 und dem Abhitzedampferzeuger 13 vorgesehen sein, über die Dampf auf unterschiedlichen Temperatur- und Druckniveaus ausgetauscht wird. Der aus der Dampfturbine 5 schliesslich austretende Abdampf wird in einem Kondensator 17 kondensiert und als Kondensat zurück in den Speisewasserbehälter 22 gepumpt. Der Kondensator 17 seinerseits ist mit einer Kühleinrichtung verbunden, die in den für die Anmeldung wichtigen Fällen als Kühlturm ausgebildet ist.

Zu der Leistungsinsel 1 gehören (neben verschiedenen Hilfstransformatoren) weiterhin ein Transformator 19, der die vom Generator 4 erzeugte elektrische Leistung spannungsmässig auf das Niveau des angeschlossenen Netzes transformiert. Zur Leistungsinsel 1 gehören auch Hilfsanlagen 20, 21 verschiedener Art, die beispielsweise der Wasser- und Brennstoffaufbereitung, der Notstromerzeugung, der Steuerung der Anlage u.ä. dienen.

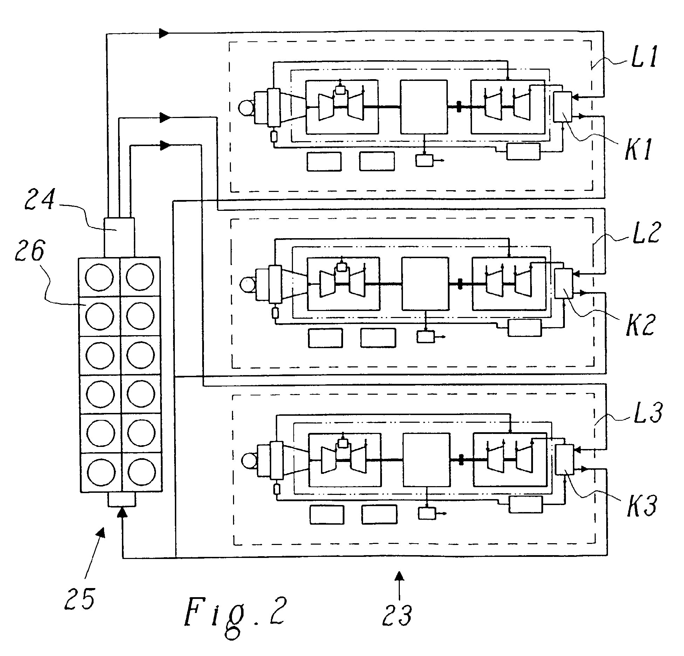

Gemäss Fig. 2 werden in einem Kombikraftwerk 23 der bekannten Art mehrere der in Fig. 1 dargestellten Leistungsinseln L1,..,L3 parallelgeschaltet, um ein vorgegebenes Leistungsniveau des Kraftwerkes zu erreichen. Die Kondensatoren K1,..,K3 der verschiedenen Leistungsinseln L1,..,L3 werden dann über entsprechende Leitungen für das Kühlwasser mit einem gemeinsamen Kühlturm 25 verbunden, der nach Massgabe der benötigten Kühlleistung aus einer Mehrzahl von einzelnen Kühlturmzellen 26 besteht. Die einzelnen, im Kühlturm zusammenlaufenden Kühlwasserkreisläufe werden durch entsprechende Hauptkühlwasserpumpen 24 in Gang gehalten, die am Kühlturm 25 angeordnet sind.

Nachteilig ist bei dem in Fig. 2 dargestellten Aufbau des Kombikraftwerks 23, dass zwar die Leistungsinseln 1 bzw. L1,..,L3 standardisiert sind und modular zu einem Kraftwerk höherer Leistung zusammengesetzt werden können, dass jedoch die Kühlkreisläufe mit dem Kühlturm je nach Anzahl und Art der Leistungsinseln 1 bzw. L1,..,L3 auf den jeweiligen Anwendungsfall speziell zugeschnitten werden müssen. Dies erfordert einen zusätzlichen Aufwand bei Planung und Bau der Anlage und erschwert eine weitergehende Standardisierung der Anlagenteile.

### DARSTELLUNG DER ERFINDUNG

Es ist daher Aufgabe der Erfindung, ein mit Leistungsinseln aufgebautes Kombikraftwerk zu schaffen, welches die angeführten Nachteile bekannter Kombikraftwerke vermeidet und insbesondere eine weitergehende Standardisierung der Kühlkreisläufe ermöglicht.

Die Aufgabe wird durch die Gesamtheit der Merkmale des Anspruchs 1 gelöst. Der Kern der Erfindung besteht darin, dass jeder der Leistungsinseln ein eigener Kühlturm zugeordnet ist und mit dem jeweiligen Kondensator in Verbindung steht. Hierdurch kann von vornherein der einzelne Kühlturm für die einzelne Leistungsinsel angepasst und konfektioniert werden, so dass er in das modulare Konzept mit einbezogen ist.

Besonders kompakt wird das Kombikraftwerk, wenn gemäss einer ersten bevorzugten Ausführungsform der Erfindung in jeder der Leistungsinseln die Gasturbinenanlage, die Dampfturbine und der Generator auf einer Welle angeordnet sind und einen Wellenstrang bilden, und der zugeordnete Kühlturm unmittelbar am Wellenstrang angeordnet ist.

Wenn an der Dampfturbine des jeweiligen Wellenstranges ein axialer Abdampfauslass vorgesehen ist, wird der zugeordnete Kühlturm vorzugsweise in Verlängerung des Wellenstranges angeordnet. Wenn an der Dampfturbine des jeweiligen Wellenstranges ein radialer Abdampfauslass vorgesehen ist, wird der zugeordnete Kühlturm vorzugsweise neben dem Wellenstrang angeordnet.

Eine zweite bevorzugte Ausführungsform der Erfindung ist dadurch gekennzeichnet, dass bei einzelnen Leistungsinseln der Kondensator in mehrere Kondensatorsektionen unterteilt ist, mehrere Hauptkühlwasserpumpen vorhanden sind, und der Kühlturm mehrere parallel arbeitende Kühlturmzellen umfasst, und dass zwischen den Kondensatorsektionen, den Hauptkühlwasserpumpen und den Kühlturmzellen eine vorgegebene Zuordnung besteht. Hierdurch lassen sich in modularer Weise sehr einfach standardisierte Abstufungen in der Kühlleistung realisieren.

Eine bevorzugte Weiterbildung dieser Ausführungsform zeichnet sich dadurch aus, dass jeder der Kondensatorsektionen eine Hauptkühlwasserpumpe zugeordnet ist, und die Hauptkühlwasserpumpen jeweils über getrennte Vorlaufleitungen mit den Kondensatorsektionen in Verbindung stehen. Eine andere bevorzugte Weiterbildung ist dadurch gekennzeichnet, dass jeder der Kondensatorsektionen eine oder mehrere Kühlturmzelle(n) zugeordnet ist (sind), und die eine oder mehrere Kühlturmzelle(n) jeweils über getrennte Rücklaufleitungen mit den Kondensatorsektionen in Verbindung stehen.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Schema einer an sich bekannten Leistungsinsel ("power island") für ein Kombikraftwerk;
- Fig. 2: das Schema eines Kombikraftwerks nach dem Stand der Technik mit mehreren Leistungsinseln gemäss Fig. 1 und einem gemeinsamen Kühlturm;
- Fig. 3: eine Leistungsinsel mit eigenem Kühlturm in Verlängerung des Wellenstranges für ein Kombikraftwerk gemäss einem ersten Ausführungsbeispiel der Erfindung;
- Fig. 4: eine Leistungsinsel mit eigenem Kühlturm neben dem Wellenstrang für ein Kombikraftwerk gemäss einem ersten Ausführungsbeispiel der Erfindung;
- Fig. 5: ein bevorzugtes Ausführungsbeispiel eines erfindungsgemässen Kombikraftwerkes mit Leistungsinseln gemäss Fig. 3;
- Fig. 6-8: verschiedene Kühlkreisläufe für eine einzelne Leistungsinsel in einem Kombikraftwerk nach der Erfindung.

### WEGE ZUR AUSFÜHRUNG DER ERFINDUNG

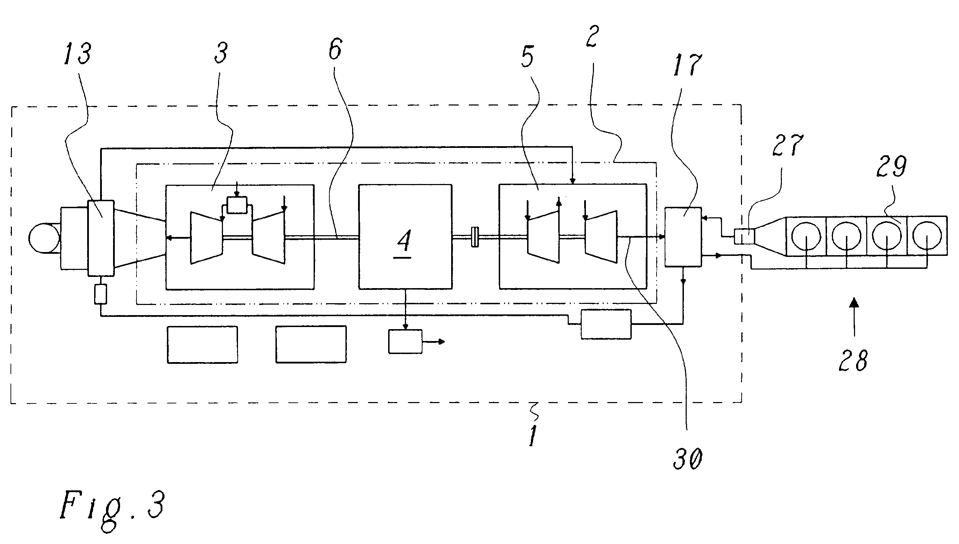

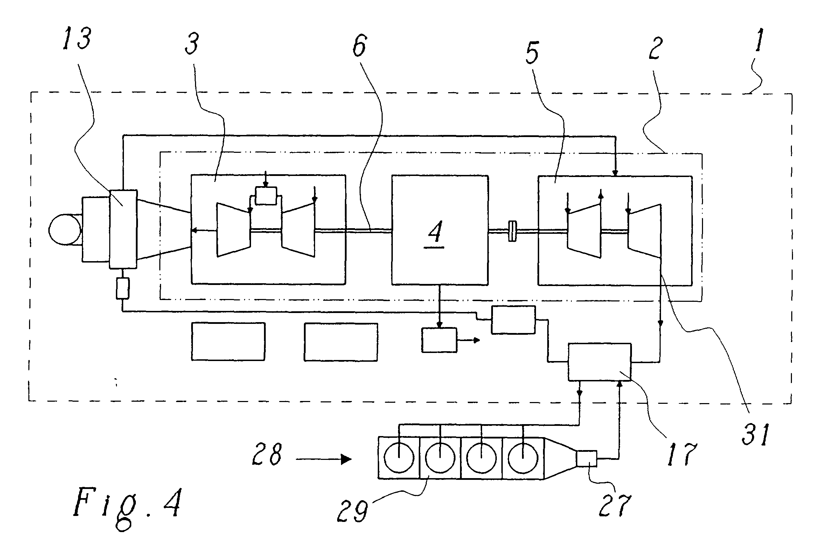

In Fig. 3 ist in einem vereinfachten, zu Fig. 1 vergleichbaren Schema eine Leistungsinsel mit eigenem Kühlturm in Verlängerung des Wellenstranges für ein Kombikraftwerk gemäss einem ersten Ausführungsbeispiel der Erfindung dargestellt. Die Leistungsinsel 1 mit dem Wellenstrang 2 entspricht dem Beispiel aus Fig. 1, weshalb hier für gleiche Anlagenteile auch die gleichen Bezugszeichen verwendet werden. Der Leistungsinsel 1 ist in Fig. 3 ein eigener Kühlturm 28 zugeordnet, der aus mehreren Kühlturmzellen 29 zusammengesetzt ist. Der Kühlturm 28 ist an den Kondensator 17 der Leistungsinsel 1 unter Bildung eines separaten Kühlkreislaufes angeschlossen. Im Kühlkreislauf wird das Kühlwasser mittels einer (oder mehrerer) Hauptkühlwasserpumpe(n) 27 vom Kühlturm 28 zum Kondensator 17 zurückgepumpt. Der Kühlturm 28 ist in der (axialen) Verlängerung des Wellenstranges 1 angeordnet. Dies ist bezüglich der Raumaufteilung und der Leitungsführung besonders günstig, wenn in der Dampfturbine 5 der Abdampf über einen axialen Abdampfauslass 30 abgegeben wird. Ist dagegen - wie in Fig. 4 dargestellt- an der Dampfturbine 5 ein radialer Abdampfauslass 31 vorgesehen, ist es aus den genannten Gründen von Vorteil, wenn der der Leistungsinsel 1 zugeordnete Kühlturm 28 neben dem Wellenstrang 2 angeordnet ist.

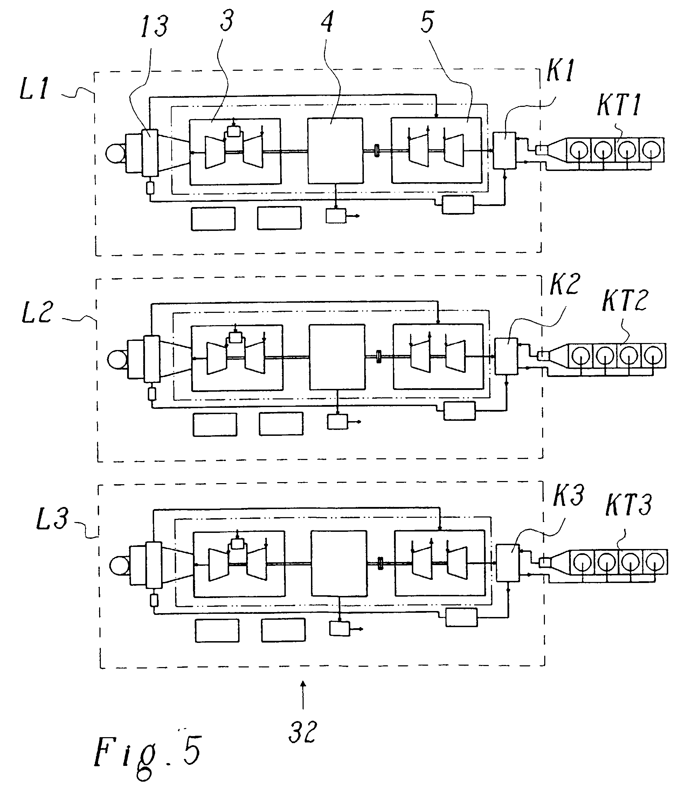

Ein mit Leistungsinseln gemäss Fig. 3 aufgebautes beispielhaftes Kombikraftwerk 32 ist in Fig. 5 dargestellt. Jede Leistungsinsel L1,..,L3 (1 in Fig. 3)hat einen eigenen Kühlturm KT1,..,KT3 (28 in Fig. 3), der jeweils an den Kondensator K1,..,K3 (17 in Fig. 3) der Leistungsinsel L1,..,L3 angeschlossen ist. Hierdurch ist es möglich, mit standardisierten Leistungsinseln und Kühltürmen ein Kombikraftwerk mit den verschiedensten Leistungsniveaus auf einfache Weise zu realisieren.

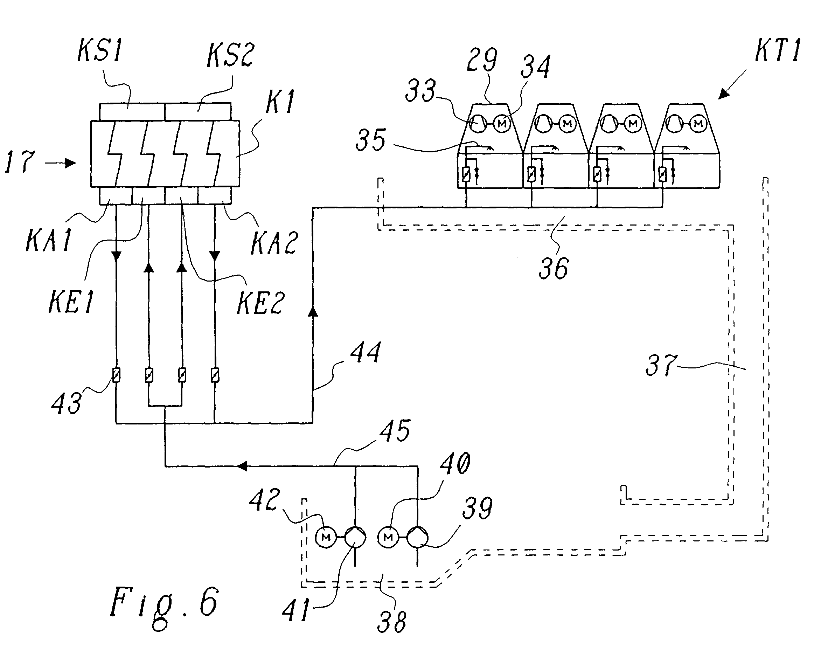

Eine weitere Möglichkeit der Standardisierung ergibt sich, wenn der Kondensator 17 bzw. K1,..,K3 jeder Leistungsinsel L1,..,L3 sowie der Kühlturm KT1,..,KT3 und die Hauptkühlwasserpumpen (27 in Fig. 3) für jede Leistungsinsel L1,..,L3 in Auslegung und Gestaltung abgestimmt ausgelegt sind. Ein erstes Beispiel eines solchen abgestimmten Kühlkreislaufs ist schematisch in Fig. 6 wiedergegeben. Der Kondensator 17 bzw. K1 (dessen Dampf- und Kondensatanschlüsse nicht gezeigt sind) ist in diesem Beispiel in zwei Kondensatorsektionen KS1 und KS2 unterteilt. Jede der Sektionen kann über einen Kondensatoreintritt KE1, KE2 und einen Kondensatoraustritt KA1, KA2 mit dem Kühlkreislauf verbunden werden. Die beiden Kondensatoraustritte KA1, KA2 sind über eine gemeinsame Rücklaufleitung 44 mit dem zugeordneten Kühlturm KT1 verbunden, der aus mehreren (im Beispiel 4) parallelgeschalteten Kühlturmzellen 29 besteht. In jeder der Kühlturmzellen 29 ist in an sich bekannter Weise eine Sprühvorrichtung 35 sowie ein durch einen Motor 34 angetriebenes Gebläse 33 angeordnet. Die Sprühvorrichtungen 35 aller Kühlturmzellen 29 sind an die gemeinsame Rücklaufleitung 44 angeschlossen. Das versprühte und durch Verdunstung und Konvektion abgekühlte Kühlwasser wird in einer unter den Kühlturmzellen 29 positionierten Wanne 36 aufgefangen und gesammelt und über einen Kanal 37 einem Pumpbecken 38 zugeleitet, aus dem es mittels zweier von Motoren 40, 42 angetriebener Hauptkühlwasserpumpen 39, 41 abgepumpt und über eine gemeinsame Vorlaufleitung 45 und die Kondensatoreintritte KE1, KE2 den Kondensatorsektionen KS1 und KS2 zugeführt wird. Durch geeignete Wahl der Anzahl der Kondensatorsektionen, Hauptkühlwasserpumpen und Kühlturmzellen können so standardisierte Leistungsniveaus bereitgestellt werden. Bevorzugt ist die Anzahl der Kondensatorsektionen KS1, KS2 gleich der Anzahl der Hauptkühlwasserpumpen 39, 41. Die Anzahl der Kühlturmzellen 29 ist dabei jeweils das n-fache oder das (n+1)-fache der Anzahl der Kondensatorsektionen (n = 1, 2, 3,...). Die Verwendung der gemeinsamen Vorlaufleitung 45 und gemeinsamen Rücklaufleitung 44 macht es erforderlich, in den Kondensatoreintritten KE1, KE2 und -austritten KA1, KA2 der Kondensatorsektionen KS1, KS2 Armaturen 43 vorzusehen.

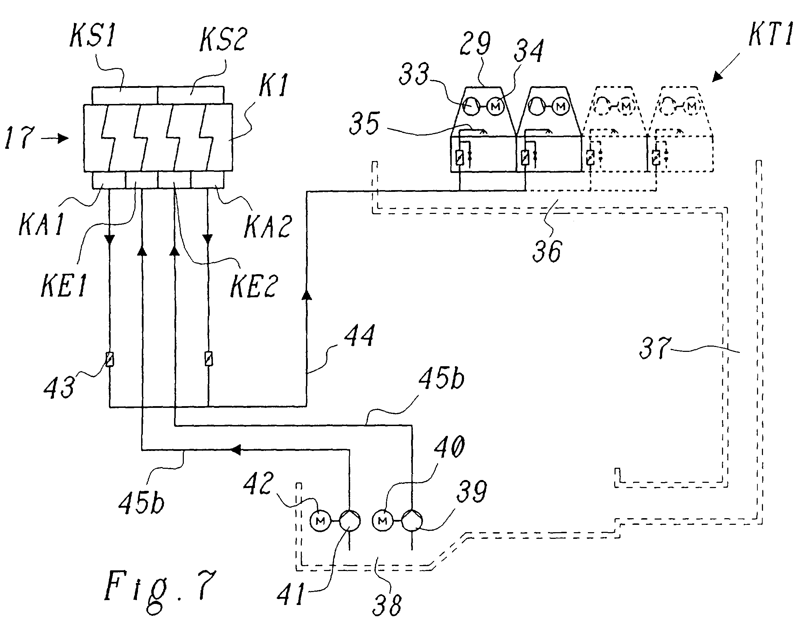

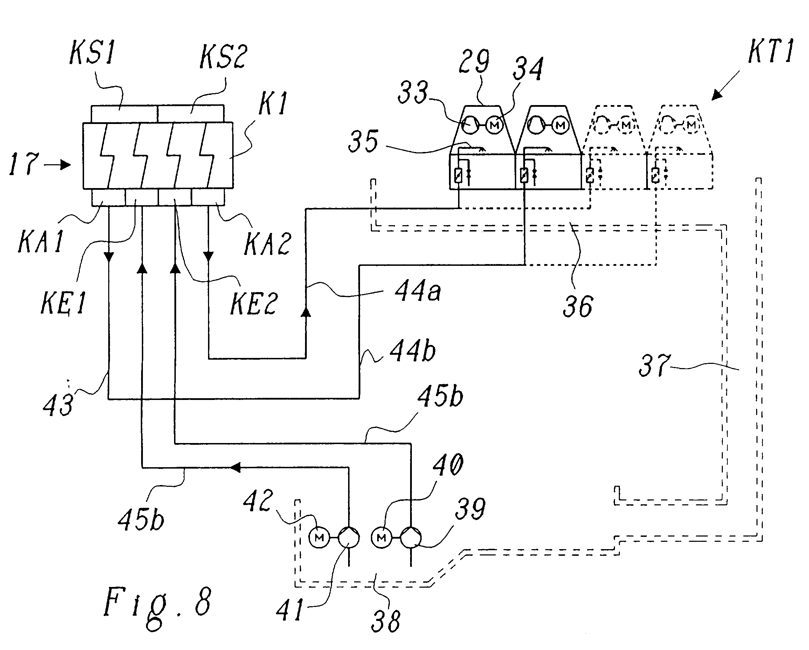

Auf diese Armaturen 43 kann teilweise oder ganz verzichtet werden, wenn gemäss Fig. 7 und 8 anstelle der gemeinsamen Vorlaufleitung getrennte Vorlaufleitungen 45a,b bzw. anstelle der gemeinsamen Vor- und Rücklaufleitung getrennte Vor- und Rücklaufleitungen 44a,b und 45a,b verwendet werden. Durch diese Trennung ergibt sich eine noch weitergehende Modularisierung der Kühlkreisläufe. In Fig. 7 und 8 ist durch gestrichelte Linien zudem angedeutet, dass der Kühlturm wahlweise mit zwei, vier (oder mehr) Kühlturmzellen 29 ausgestattet sein kann.

Insgesamt ergibt sich mit der Erfindung ein Konzept für ein aus Leistungsinseln aufgebautes Kombikraftwerk, welches eine stärkere Standardisierung und damit eine vereinfachte Anlagenplanung und -realisierung ermöglicht.

### BEZUGSZEICHENLISTE

- 1: Leistungsinsel ("power island")
- 2: Wellenstrang ("power train")
- 3: Gasturbinenanlage
- 4: Generator
- 5: Dampfturbine
- 6: Welle
- 7: Kupplung
- 8: Turbine
- 9: Brennkammer
- 10: Verdichter
- 11,12: Turbinenstufe
- 13: Abhitzedampferzeuger
- 14: Kamin
- 15: Speisewasserpumpe
- 16: Frischdampfleitung
- 17: Kondensator
- 18: Speisewasserleitung
- 19: Transformator
- 20,21: Hilfsanlage
- 22: Speisewasserbehälter
- 23,32: Kombikraftwerk
- 24,27: Hauptkühlwasserpumpe
- 25,28: Kühlturm
- 26,29: Kühlturmzelle
- 30: axialer Abdampfauslass
- 31: radialer Abdampfauslass
- 33: Gebläse
- 34: Motor
- 35: Sprühvorrichtung
- 36: Wanne
- 37: Kanal
- 38: Pumpbecken
- 39,41: Hauptkühlwasserpumpe
- 40,42: Motor
- 43: Armatur
- 44,44a,b: Rücklaufleitung
- 45,45a,b: Vorlaufleitung
- L1,..,L3: Leistungsinsel
- K1,..,K3: Kondensator
- KA1, KA2: Kondensatoraustritt
- KE1,KE2: Kondensatoreintritt
- KS1, KS2: Kondensatorsektion
- KT1,...,KT3: Kühlturm

## Patentansprüche

1. Kombikraftwerk (32) mit einer Mehrzahl von parallel arbeitenden Leistungsinseln (1; L1,..,L3), welche jeweils eine Gasturbinenanlage (3), eine Dampfturbine (5), einen Generator (4), einen Wasser/Dampfkreislauf mit einem Abhitzedampferzeuger (13) und einem Kondensator (17; K1,..,K3), und zugehörige Hilfsanlagen (20, 21) umfassen, dadurch gekennzeichnet, dass jeder der Leistungsinseln (1; L1,..,L3) ein eigener Kühlturm (28; KT1,..,KT3) zugeordnet ist, und dass der Kühlturm (28; KT1,..,KT3) mit dem jeweiligen Kondensator (17; K1,..,K3) in Verbindung steht.

2. Kombikraftwerk nach Anspruch 1, dadurch gekennzeichnet, dass in jeder der Leistungsinseln (1; L1,..,L3) die Gasturbinenanlage (3), die Dampfturbine (5) und der Generator (4) auf einer Welle (6) angeordnet sind und einen Wellenstrang (2) bilden, und dass der zugeordnete Kühlturm (28; KT1,..,KT3) unmittelbar am Wellenstrang (2) angeordnet ist.

3. Kombikraftwerk nach Anspruch 2, dadurch gekennzeichnet, dass an der Dampfturbine (5) des jeweiligen Wellenstranges (2) ein axialer Abdampfauslass (30) vorgesehen ist, und dass der zugeordnete Kühlturm (28; KT1,..,KT3) in Verlängerung des Wellenstranges (2) angeordnet ist.

4. Kombikraftwerk nach Anspruch 2, dadurch gekennzeichnet, dass an der Dampfturbine (5) des jeweiligen Wellenstranges (2) ein radialer Abdampfauslass (31) vorgesehen ist, und dass der zugeordnete Kühlturm (28; KT1,..,KT3) neben dem Wellenstrang (2) angeordnet ist.

5. Kombikraftwerk nach einem der Ansprüche 1 bis 4, dadurch gekennzeichnet, dass bei einzelnen Leistungsinseln (1; L1,..,L3) der Kondensator (17; K1,..,K3) in mehrere Kondensatorsektionen (KS1, KS2) unterteilt ist, mehrere Hauptkühlwasserpumpen (39, 41) vorhanden sind, und der Kühlturm (28; KT1,..,KT3) mehrere parallel arbeitende Kühlturmzellen (29) umfasst, und dass zwischen den Kondensatorsektionen (KS1, KS2), den Hauptkühlwasserpumpen (39, 41) und den Kühlturmzellen (29) eine vorgegebene Zuordnung besteht.

6. Kombikraftwerk nach Anspruch 5, dadurch gekennzeichnet, dass die Hauptkühlwasserpumpen (39, 41) über eine gemeinsame Vorlaufleitung (45) mit den Kondensatorsektionen (KS1, KS2) in Verbindung stehen, und dass die Kühlturmzellen (29) über eine gemeinsame Rücklaufleitung (44) mit den Kondensatorsektionen (KS1, KS2) in Verbindung stehen.

7. Kombikraftwerk nach Anspruch 5, dadurch gekennzeichnet, dass jeder der Kondensatorsektionen (KS1, KS2) eine Hauptkühlwasserpumpe (39, 41) zugeordnet ist, und die Hauptkühlwasserpumpen (39, 41) jeweils über getrennte Vorlaufleitungen (45a,b) mit den Kondensatorsektionen (KS1, KS2) in Verbindung stehen.

8. Kombikraftwerk nach Anspruch 5, dadurch gekennzeichnet, dass jeder der Kondensatorsektionen (KS1, KS2) eine oder mehrere Kühlturmzelle(n) (29) zugeordnet ist (sind), und die eine oder mehrere Kühlturmzelle(n) (29) jeweils über getrennte Rücklaufleitungen (44a,b) mit den Kondensatorsektionen (KS1, KS2) in Verbindung stehen.
